# EUROPÄISCHE PATENTSCHRIFT

(11) **EP 1 686 398 B1**
(45) Veröffentlichungstag und Bekanntmachung des Hinweises auf die Patenterteilung: **21.05.2008**
(21) Anmeldenummer: 06000755.6
(22) Anmeldetag: 13.01.2006
(51) Int. Cl.: G01V 8/20

(54) **Optoelektronischer Sensor**
Optoelectronic sensor
Capteur optoélectronique

(30) Priorität: 31.01.2005 DE 102005004419
(43) Veröffentlichungstag der Anmeldung: 02.08.2006
(73) Patentinhaber: SICK AG, 79183 Waldkirch (DE)
(72) Erfinder: Weber, Helmut, 79312 Emmendingen (DE)
(74) Vertreter: Manitz, Finsterwald & Partner GbR

(56) Entgegenhaltungen:
- EP-A- 1 010 992
- EP-A- 1 512 992
- US-A- 4 958 067
- US-A1- 2001 045 512
- PATENT ABSTRACTS OF JAPAN Bd. 2003, Nr. 12, 5. Dezember 2003 (2003-12-05) & JP 2004 170128 A (OPTEX CO LTD), 17. Juni 2004 (2004-06-17) -& US 2005/035277 A1 (MATSUYAMA TOSHIYASU ET AL) 17. Februar 2005 (2005-02-17)

## Beschreibung

Die Erfindung betrifft einen optoelektronischen Sensor mit einer integrierten Anordnung mehrerer, im Bereich einer Empfangsoptik angeordneter Leuchtdioden zur Ausleuchtung eines Erfassungsbereichs, wobei den Leuchtdioden strahlformende optische Elemente zugeordnet sind.

Optoelektronische Sensoren der genannten Art sind aus dem Stand der Technik bekannt und werden beispielsweise sowohl zur Objekterfassung als auch insbesondere zur Erfassung von Codes eingesetzt. Einfache Sensoren arbeiten dabei ohne strahlformende optische Elemente, was zur Folge hat, dass ein vergleichsweise großer Anteil des von den Leuchtdioden ausgesandten Lichts nicht zum Erfassungsbereich gelangt, so dass die Beleuchtung des Erfassungsbereichs letztlich in nicht sehr effizienter Weise erfolgt.
Gegenüber derartigen Sensoren verbesserte Sensoren für anspruchsvolle Anwendungen werden, wie eingangs bereits erwähnt, mit strahlformenden optischen Elementen vor den Leuchtdioden ausgestattet. Diese strahlformenden optischen Elemente sorgen dafür, dass das von den Leuchtdioden abgestrahlte Licht möglichst vollständig zum Erfassungsbereich gelangt, so dass hier eine erhöhte Effizienz bei der Beleuchtung erreichbar ist.

Trotz der Vorsehung strahlformender Elemente ist es jedoch mit bekannten optoelektronischen Sensoren noch nicht möglich, im Erfassungsbereich jeweils gewünschte Beleuchtungsprofile zu erzeugen, die für konkrete Anwendungen benötigt werden. Beispielsweise ist es in vielen Anwendungsfällen wünschenswert, eine möglichst homogene Ausleuchtung des Erfassungsbereichs sicherzustellen. In anderen Anwendungsfällen kann jedoch auch eine intensivere Beleuchtung des Erfassungsbereichs an seinen Rändern gewünscht sein (Randüberhöhung). Weiterhin ist es beispielsweise bei optoelektronischen Sensoren, die auf einer rechteckigen Fläche angeordnete Leuchtdioden besitzen, oftmals wünschenswert, das von diesen Leuchtdioden abgestrahlte Licht möglichst vollständig auf einen quadratischen Erfassungsbereich zu lenken.
Derartige Beleuchtungsprofile mit ihren jeweiligen Charakteristika lassen sich von optoelektronischen Sensoren der eingangs genannten Art nicht oder nicht in ausreichender Qualität erzeugen.

Die US 2001/045512 A1 offenbart einen optoelektronischen Sensor gemäß dem Oberbegriff des Anspruchs 1.

Die US-A-4 958 067 beschreibt einen optoelektronischen Sensor zum Erfassen der Position eines Objekts, wobei ein lichtübertragendes Element des Sensors eine stufenförmige Rückseite aufweist, um einen Lichtstrahl in gewünschter Weise in Richtung eines Fotodetektors des Sensors zu reflektieren.

Die EP-A-1 010 992 betrifft ein optisches System, welches eine flache Lichtleiterplatte umfasst, die an ihrer Rückseite zur Reflexion und Umlenkung eines einfallenden oder eines ausfallenden Lichtstrahls keilförmige Ausnehmungen aufweist.

Aus der JP 2004-170128 A ist ein optoelektronischer Sensor bekannt, der über ein strahlformendes Element verfügt, das es ermöglichen, unterschiedlich weit von einem Fotodetektor und einer Beleuchtungsquelle des Sensors entfernte Bereiche gleichmäßig gut überwachen zu können, wobei das strahlformende Element Keilelemente umfasst.

Die D5 offenbart einen optischen Sensor, der Umlenkprismen zum Teilen eines Beleuchtungslichtstrahls aufweist.

Eine Aufgabe der Erfindung besteht darin, einen optoelektronischen Sensor der eingangs genannten Art derart auszubilden, dass sich im Erfassungsbereich jeweils gewünschte Beleuchtungsprofile erzeugen lassen, wobei hier gleichzeitig ein maximaler Wirkungsgrad erreicht werden soll, indem möglichst die gesamte, von den Leuchtdioden abgestrahlte Lichtmenge auf den Erfassungsbereich gelenkt wird.

Diese Aufgabe wird erfindungsgemäß durch die Merkmale des Anspruchs 1 gelöst.

Erfindungsgemäß werden den Leuchtdioden, insbesondere allen Leuchtdioden des optoelektronischen Sensors, jeweils individuelle strahlformende Elemente zugeordnet, die dazu geeignet sind, das von der jeweiligen Leuchtdiode ausgesandte Licht in der bezogen auf die jeweilige Leuchtdiode gewünschten Richtung abzustrahlen. Unter Licht ist im Sinne der Erfindung grundsätzlich auch Strahlung im nicht sichtbaren Bereich, also z.B. IR- oder UV-Strahlung, zu verstehen. Die einzelnen strahlformenden optischen Elemente können erfindungsgemäß also in ihrer Ausformung und/oder Position relativ zur Empfangsoptik des optoelektronischen Sensors so ausgebildet werden, dass sich im Erfassungsbereich durch Überlagerung des von allen Leuchtdioden abgestrahlten Lichts das jeweils gewünschte Beleuchtungsprofil einstellt. Es kann also das von jeder Leuchtdiode ausgesandte Licht weitestgehend vollständig und exakt an diejenige Position des Erfassungsbereichs gelenkt werden, an der es benötigt wird, so dass sich beispielsweise Beleuchtungsprofile mit homogener Beleuchtung oder Beleuchtungsprofile mit Randüberhöhung problemlos erzeugen lassen. Ebenso ist es erfindungsgemäß ohne Schwierigkeiten möglich, von einem rechteckigen Leuchtdiodenfeld abgestrahltes Licht vollständig auf einen quadratischen Erfassungsbereich zu lenken. Beliebige andere Charakteristika von Beleuchtungsprofilen lassen sich erfindungsgemäß ebenfalls erzeugen.

Durch die erfindungsgemäße keilförmige Ausbildung der strahlformenden optischen Elemente lassen sich diese im Vergleich zu sphärischen Linsen oder Fresnellinsen vergleichsweise kostengünstig und einfach herstellen, so dass die Gesamtkosten des optoelektronischen Sensors durch die erfindungsgemäß ausgebildeten strahlformenden optischen Elemente nicht wesentlich erhöht werden.

Gemäß einer erfindungsgemäßen Variante kann einer Leuchtdiode jeweils genau ein Keilelement zugeordnet werden, welches für die auf die jeweilige Leuchtdiode bezogene, gewünschte Strahlformung und -richtung sorgt.

Alternativ ist es jedoch auch möglich, einer Leuchtdiode Bereiche von genau zwei oder auch von bis zu vier benachbarten Keilelementen zuzuordnen, was nachfolgend beispielhaft anhand von genau zwei benachbarten Keilelementen noch näher erläutert wird.

Zumindest einige der erfindungsgemäßen strahlformenden Elemente können so ausgelegt werden, dass sie das von den jeweiligen Leuchtdioden abgestrahlte Licht etwas in Richtung der optischen Achse der Empfangsoptik umlenken. Dies ist vorteilhaft, da im Bereich der Empfangsoptik keine Leuchtdioden vorgesehen werden können, so dass es in dem direkt unter der Empfangsoptik liegenden Erfassungsbereich bzw. in derjenigen Region des Erfassungsbereichs, welche den Schnittpunkt zwischen optischer Achse der Empfangsoptik und der Ebene des Erfassungsbereichs umgibt, zu keiner ausreichenden Beleuchtung kommt. Wenn erfindungsgemäß Licht gezielt in diesen Bereich gelenkt wird, kann sichergestellt werden, dass auch dieser Bereich ausreichend stark beleuchtet wird.

Für den Fall, dass einer Leuchtdiode genau ein Keilelement zugeordnet wird, kann dieses als Keilplatte mit einer Schrägfläche ausgebildet werden, welche auf der der Leuchtdiode zugewandten Seite und/oder auf der der Leuchtdiode abgewandten Seite der Keilplatte vorgesehen ist. Zum Erreichen des jeweils erforderlichen Beleuchtungsprofils kann die Neigung der Schrägfläche jeder Keilplatte in zwei zueinander senkrechten Richtungen individuell an die Relativposition zwischen der jeweils zugeordneten Leuchtdiode und der Empfangsoptik angepasst werden. Durch eine solche individuelle Neigung der Schrägfläche um zwei zueinander senkrechte Neigungsachsen kann das von jeder Leuchtdiode ausgesandte Licht sehr exakt an die jeweils gewünschte Position des Erfassungsbereichs gelenkt werden.

Die Neigung der Schrägfläche jeder Keilplatte in zwei zueinander senkrechten Richtungen kann auch dann individuell in der jeweils erforderlichen Weise eingestellt werden, wenn einer Leuchtdiode z.B. Bereiche von zwei oder vier aneinander angrenzenden Keilplatten zugeordnet werden. Bei beispielsweise vier aneinander angrenzenden Keilplatten, kann die Leuchtdiode dann so angeordnet werden, dass sie sich gegenüber demjenigen Punkt befindet, an dem alle vier Keilplatten aneinander angrenzen.

In wirtschaftlicher Hinsicht bevorzugt ist es, wenn das einer Leuchtdiode zugeordnete Keilelement nicht als individuelle Keilplatte, sondern vielmehr als ein Abschnitt genau eines Keilstreifens oder Keilringes mit einer Schrägfläche ausgebildet ist, welche auf der der Leuchtdiode zugewandten Seite und/oder auf der der Leuchtdiode abgewandten Seite des Keilstreifens oder Keilringes vorgesehen ist. An einer derartigen Ausführungsform ist von Vorteil, dass nicht lauter einzelne Keilplatten angefertigt werden müssen, sondern dass ein Keilstreifen oder ein Keilring so angeordnet werden kann, dass er mehreren Leuchtdioden zugeordnet ist, welche entlang des Keilstreifens oder Keilrings angeordnet sind, so dass letztlich jeder Leuchtdiode nur ein Abschnitt des Keilstreifens oder Keilrings zugeordnet ist. Die optischen Eigenschaften des Keilstreifens oder Keilrings sind über seine Längserstreckung hinweg konstant. Die optischen Eigenschaften von mehreren vorgesehenen Keilstreifen oder Keilringe untereinander hingegen unterscheiden sich voneinander und sind von ihrer Relativposition zur Empfangsoptik abhängig.

Keilplatte, Keilstreifen oder Keilring können mit der jeweils zugeordneten Leuchtdiode derart ausgerichtet werden, dass das von dieser Leuchtdiode ausgesandte Licht möglichst vollständig durch die Schrägfläche der jeweiligen Keilplatte oder des jeweiligen Keilstreifens oder Keilrings tritt. Auf diese Weise wird die auf den Erfassungsbereich auftreffende Lichtmenge maximiert.

Das einer Leuchtdiode zugeordnete Keilelement kann auch als Abschnitt von bis zu vier, bevorzugt von genau zwei aneinander angrenzenden Keilstreifen oder Keilringen ausgebildet werden. Auch hier gilt wiederum, dass die optischen Eigenschaften der Keilstreifen oder Keilringe über ihre Längserstreckung hinweg konstant sind, sich von Keilstreifen zu Keilstreifen bzw. von Keilring zu Keilring jedoch voneinander unterscheiden. Die Keilstreifen oder Keilringe können mit der jeweils zugeordneten Leuchtdiode in diesem Fall derart ausgerichtet werden, dass das von dieser Leuchtdiode ausgesandte Licht ungefähr zur Hälfte durch die Schrägfläche eines Keilstreifens oder Keilrings und zur anderen Hälfte durch die Schrägfläche eines weiteren Keilstreifens oder Keilringes tritt. So wird erreicht, dass das von einer Leuchtdiode ausgesandte Licht in zwei Lichtmengenbereiche aufgeteilt wird, welche eine unterschiedliche Strahlformung erfahren können. Besonders vorteilhaft bei dieser Anordnung ist die Tatsache, dass sich ein erhöhter Wirkungsgrad ergibt, da die in den Keilstreifen oder Keilringen auftretenden Lichtverluste minimiert werden. Dies wird im Zusammenhang mit der Figurenbeschreibung noch näher erläutert.

Besonders bevorzugt bei der zuletzt beschriebenen Ausführungsform ist es, wenn die Schrägfläche jedes Keilstreifens oder Keilringes von zwei parallel zueinander verlaufenden Abschnitten mit voneinander verschiedenen Neigungen gebildet ist, wobei insbesondere jeder der beiden Abschnitte ungefähr die Hälfte der Schrägfläche bildet. Dabei ist es vorteilhaft, wenn die beiden Abschnitte stufenlos ineinander übergehen. Auch diese Ausführungsform wird im Rahmen der Figurenbeschreibung noch erklärt.

Eine keine Schrägflächen aufweisende Endfläche der Keilplatte des Keilstreifens oder des Keilringes kann senkrecht zur Hauptabstrahlrichtung der Leuchtdiode verlaufen. Die genannten Endflächen aller Keilplatten, Keilstreifen oder Keilringe können in diesem Fall innerhalb einer einzigen Ebene angeordnet werden. Wenn solche Endflächen auf der der Leuchtdiode abgewandten Seite angeordnet werden, kann der Verbund aus allen Keilplatten, Keilstreifen oder Keilringen eine plane Gerätefrontscheibe des erfindungsgemäßen Sensors bilden.

Alle strahlformenden optischen Elemente sind fest verbunden und sind in einer einheitlichen, eine Mehrzahl von keilförmigen Stufen aufweisenden Stufenplatte ausgeformt. Dadurch entfällt ein aufwändiges Justieren der optischen Elemente relativ zueinander. Eine solche Stufenplatte, die beispielsweise als nachbearbeitetes Spritzgussteil ausgeführt sein kann, lässt sich besonders kostengünstig herstellen, wobei hier mittels eines einzigen Spritzvorgangs alle strahlformenden optischen Elemente eines optoelektronischen Sensors gemeinsam herstellbar sind.

In der Stufenplatte können mehrere konzentrische Keilringe vorgesehen werden, welche insbesondere direkt aneinander angrenzen. Eine solche Anordnung ist sinnvoll, wenn der optoelektronische Sensor ringförmig um die Empfangsoptik herum angeordnete Leuchtdioden aufweist. Jedem Ring von Leuchtdioden kann dann ein Keilring oder alternativ Abschnitte zweier benachbarter Keilringe zugeordnet werden. Wenn das Lichtaustrittsfenster des optoelektronischen Sensors eine rechteckige Form besitzt und auch die Leuchtdioden im Bereich einer rechteckigen Fläche angeordnet sind, ist es vorteilhaft, wenn auch die Stufenplatte eine rechteckige Form besitzt, wobei in diesem Fall zumindest einige der konzentrischen Keilringe nur unvollständig auf der Stufenplatte vorhanden sind. Eine solche Ausführungsform wird nachfolgend ebenfalls noch im Rahmen der Figurenbeschreibung näher erläutert.

Weitere bevorzugte Ausführungsformen der Erfindung sind in den Unteransprüchen beschrieben.

Die Erfindung wird nachfolgend anhand von Ausführungsbeispielen unter Bezugnahme auf die Figuren näher erklärt; in diesen zeigen:
- Fig. 1: einen Schnitt durch erfindungsgemäße Keilelemente mit davor angeordneten Leuchtdioden,
- Fig. 2: einen Schnitt durch eine erfindungsgemäß ausgebildete Stufenplatte mit einer vor einem Keilelement der Stufenplatte angeordneten Leuchtdiode,
- Fig. 3: einen Schnitt durch eine weitere Ausführungsform einer erfindungsgemäßen Stufenplatte mit einer im Bereich zweier Keilelemente angeordneten Leuchtdiode,
- Fig. 4: eine dreidimensionale Darstellung einer erfindungsgemäßen Stufenplatte mit davor angeordneten Leuchtdioden, und
- Fig. 5: eine Draufsicht auf eine erfindungsgemäße Stufenplatte.

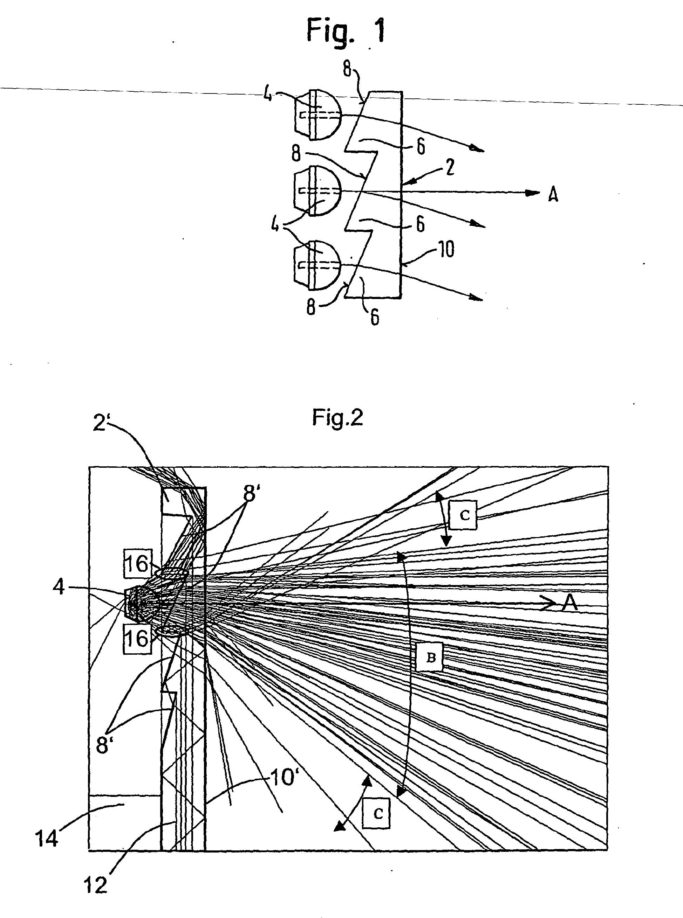

Fig. 1 zeigt einen Schnitt durch einen Abschnitt einer erfindungsgemäßen Stufenplatte 2 mit vor der Stufenplatte 2 angeordneten Leuchtdioden 4. Der dargestellte Abschnitt der Stufenplatte 2 weist insgesamt drei als Keilplatten 6 ausgebildete erfindungsgemäße Keilelemente auf, wobei die Schrägflächen 8 der Keilplatten 6 den Leuchtdioden 4 zugewandt sind.

Die den Leuchtdioden 4 und den Schrägflächen 8 abgewandten Endflächen 10 der Keilplatten 6 erstrecken sich senkrecht zur Hauptabstrahlrichtung A der Leuchtdioden 4 in einer gemeinsamen Ebene. Dementsprechend kann die Stufenplatte 2 aus einer einheitlichen Platte hergestellt werden, welche lediglich auf der den Leuchtdioden 4 zugewandten Seite derart bearbeitet wird, dass die Schrägflächen 8 ausgebildet werden. Die Stufenplatte 2 bildet in diesem Fall eine außenseitig plane Gerätefrontscheibe eines erfindungsgemäßen Sensors.

Die von den Leuchtdioden 4 ausgesandten Lichtstrahlen werden ein erstes Mal beim Eintreten in die Stufenplatte 2 im Bereich der Schrägflächen 8 und ein zweites Mal beim Austreten aus der Stufenplatte 2 im Bereich der Endflächen 10 gebrochen und somit gegenüber der Hauptabstrahlrichtung A der Leuchtdioden 4 in einer jeweils gewünschten Richtung abgelenkt. Durch die Größe des Neigungswinkels der Schrägflächen 8 lässt sich dabei die jeweils gewünschte Ablenkung einstellen. Die Neigung der Schrägflächen 8 kann dabei sowohl um eine senkrecht zur Zeichenebene verlaufende Neigungsachse als auch - bei Bedarf - um eine Neigungsachse eingestellt werden, welche in der Zeichenebene von oben nach unten verläuft. Eine Einstellung der Schrägfläche um die letztgenannte Neigungsachse ist jedoch nicht möglich, wenn anstelle von einzelnen Keilplatten Keilstreifen oder Keilringe zum Einsatz gelangen, wie sie vorstehend bereits erwähnt wurden.

Eine Einstellung der Neigung der Schrägflächen 8 in allen Richtungen lässt zum einen in vorteilhafter Weise zu, das von den Leuchtdioden abgestrahlte Licht exakt in die jeweils gewünschte Richtung zu lenken, auf der anderen Seite ist eine derart individuelle Anpassung der Schrägflächen 8 an jede einzelne Leuchtdiode 4 jedoch mit hohem Aufwand verbunden. Dieser Aufwand kann durch die Verwendung von Keilstreifen oder Keilringen verringert werden, was immer noch eine für die meisten Anwendungsfälle ausreichend gezielte Ablenkung des von den Leuchtdioden 4 abgestrahlten Lichts zulässt.

Die Neigungen der Schrägflächen 8 können verschieden voneinander gewählt werden, so dass eine Überlagerung des durch alle Leuchtdioden 4 abgestrahlten Lichts letztlich zu dem jeweils gewünschten Beleuchtungsprofil im Erfassungsbereich des optoelektronischen Sensors führt.

Fig. 2 zeigt eine Darstellung, welche im Wesentlichen der Darstellung gemäß Fig. 1 entspricht, wobei hier jedoch aus Gründen der Übersichtlichkeit nur eine einzelne Leuchtdiode 4 exemplarisch gemeinsam mit der Gesamtheit der von ihr ausgesandten Lichtstrahlen dargestellt ist. Die Stufenplatte 2' gemäß Fig. 2 besitzt insgesamt vier Schrägflächen 8', welche alle unterschiedliche Neigungen gegenüber der Hauptabstrahlrichtung A der Leuchtdiode 4 aufweisen. Gegenüber jeder Schrägfläche 8' ist jeweils eine Leuchtdiode 4 angeordnet, von denen, wie bereits erwähnt, in Fig. 2 nur eine dargestellt ist. Angrenzend an denjenigen Bereich 12 der Stufenplatte 2', der keine Schrägflächen 8' aufweist, ist eine Empfangsoptik 14 vorgesehen.

Die Neigung der Schrägflächen 8' gegenüber der Endfläche 10' nimmt im dargestellten Ausführungsbeispiel von Keilelement zu Keilelement mit zunehmendem Abstand von der Empfangsoptik 14 zu, so dass die von den Leuchtdioden 4 ausgesandten Lichtstrahlen mit zunehmendem Abstand von der Empfangsoptik 14 stärker gebrochen werden. Grundsätzlich können die Schrägflächen 8' jedoch jede beliebige Neigung, insbesondere auch unabhängig vom Abstand von der Empfangsoptik 14, besitzen, um so jeweils gewünschte Beleuchtungsprofile zu erzeugen.

Vorteilhaft ist es, wenn die Abstrahlcharakteristik der Leuchtdioden 4, die Größe und Orientierung der Schrägflächen 8' und der Abstand zwischen den Leuchtdioden 4 und den Schrägflächen 8' so gewählt wird, dass das von einer Leuchtdiode 4 abgestrahlte Licht möglichst vollständig auf die eine, ihr zugeordnete Schrägfläche 8' trifft. Dieses Kriterium trifft auf die in Fig. 2 mit B einschließlich Doppelpfeil gekennzeichneten Lichtstrahlen zu. All diese Lichtstrahlen treten aus der Endfläche 10' aus, nachdem sie durch die der Leuchtdiode 4 zugeordnete Schrägfläche 8' in die Stufenplatte 2' eingetreten sind.

Ein Teil der von der Leuchtdiode 4 ausgesandten Strahlung trifft in den beiden mit 16 gekennzeichneten Bereichen auf Stufen, die zwischen zwei benachbarten Schrägflächen 8' ausgebildet sind. Die auf diese beiden Stufenbereiche 16 auftreffende Strahlung geht letztlich verloren und ist zur Bestrahlung des Erfassungsbereichs nicht verwendbar. Konkret tritt bezüglich der auf den oberen Stufenbereich 16 auftreffenden Strahlung ein Lichtleitereffekt innerhalb der Stufenplatte 2' auf, so dass diese Strahlung letztlich in unerwünschter Weise seitlich aus der Stufenplatte 2' austritt. Der auf den unteren Stufenbereich 16 auftreffende Lichtanteil wird von der Stufe durch die Endfläche 10' derart reflektiert, dass er letztlich am zu beleuchtenden Erfassungsbereich vorbeigeleitet wird. Die genannten, durch die Stufenbereiche 16 beeinflussten Strahlungsanteile sind jedoch so gering, dass ein optoelektronischer Sensor mit einer Stufenplatte 2' gemäß Fig. 2 dennoch in der erwünschten erfindungsgemäßen Weise arbeiten kann.

Weitere Strahlungsanteile der Leuchtdiode 4 treffen auf benachbarte Schrägflächen 8', die nicht der in Fig. 2 eingezeichneten Leuchtdiode 4 zugeordnet sind. Diese Strahlungsanteile werden dann von den benachbarten Schrägflächen 8' gebrochen und großteils in erwünschter Weise zum Erfassungsbereich geleitet. Die entsprechenden Lichtstrahlenbereiche sind in Fig. 2 mit C einschließlich Doppelpfeil gekennzeichnet.

Dem Verlauf der Gesamtheit der in Fig. 2 eingezeichneten Lichtstrahlen kann entnommen werden, dass diese im Wesentlichen etwas in Richtung der Empfangsoptik 14 gebrochen werden, was sinnvoll ist, da ausgehend vom Bereich der Empfangsoptik 14 keine Beleuchtung des Erfassungsbereichs stattfinden kann. Dementsprechend sorgen erfindungsgemäß die die Empfangsoptik 14 umgebenden Leuchtdioden aufgrund der erfindungsgemäß vorgesehenen Schrägflächen 8' für eine Beleuchtung des Erfassungsbereichs auch direkt gegenüber der Empfangsoptik 14.

Wenn die Stufenplatte 2' gemäß Fig. 2 als rotationssymmetrische Stufenplatte ausgebildet wird, können um die Empfangsoptik 14 herum konzentrische Ringe von Leuchtdioden 4 gebildet werden, die dann für eine optimale Ausleuchtung des Erfassungsbereichs sorgen.

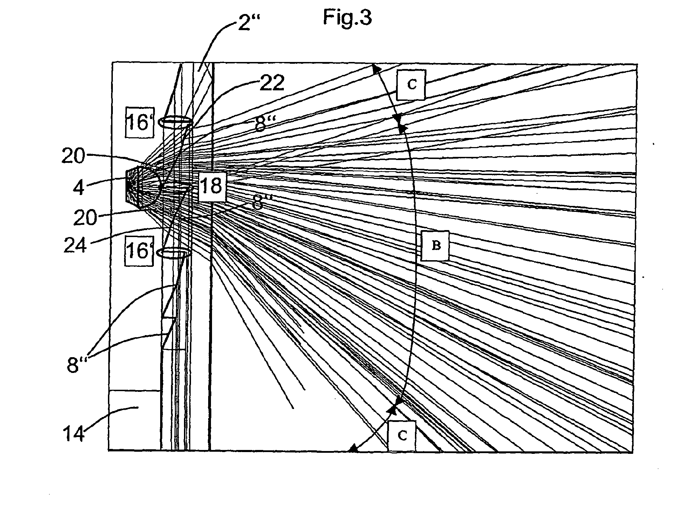

Fig. 3 zeigt eine gegenüber Fig. 2 verbesserte Ausführungsform, bei der die wiederum nur exemplarisch dargestellte Leuchtdiode 4 direkt gegenüber einem Stufenbereich 18 angeordnet ist, so dass das von der Leuchtdiode 4 abgestrahlte Licht je ungefähr zur Hälfte auf benachbarte Schrägflächen 8" der Stufenplatte 2" trifft.

Da die von der Leuchtdiode 4 ausgesandte Strahlung im Stufenbereich 18 im Wesentlichen parallel zum Stufenverlauf gerichtet ist, wird die ausgesandte Strahlung durch den Stufenbereich 18 so gut wie nicht beeinflusst, was die Effizienz der Gesamtanordnung erhöht.

Die Schrägflächen 8" der Stufenplatte 2" weisen in ihrem mittleren Bereich jeweils einen Knick auf, so dass sie beidseits des Knicks unterschiedliche optische Eigenschaften besitzen. Die Neigung der Schrägflächen 8" ist dementsprechend hälftig an diejenige Leuchtdiode 4 angepasst, die sich am nächsten am jeweiligen Schrägflächenbereich befindet. Hinsichtlich der in Fig. 3 lediglich exemplarisch dargestellten Leuchtdiode 4 sind die beiden Bereiche 20 an die dargestellte Leuchtdiode angepasst, wohingegen die angrenzenden Bereiche 22 und 24 an die der Leuchtdiode 4 benachbarten, in Fig. 3 nicht dargestellten Leuchtdioden angepasst sind. Die Winkel der Knicke benachbarter Schrägflächen 8" können voneinander abweichen, wie dies in Fig. 3 dargestellt ist.

Mit B einschließlich Doppelpfeil ist in Fig. 3 wiederum derjenige Lichtanteil gekennzeichnet, welcher durch die Bereiche 20 der Schrägflächen 8" tritt und somit direkt in jeweils gewünschter Weise auf den Erfassungsbereich auftrifft.

Der auf die angrenzenden Stufenbereiche 16' auftreffende Lichtanteil ist bei der Ausführungsform gemäß Fig. 3 minimal, so dass hier praktisch kein Lichtverlust auftritt.

Die durch die der Leuchtdiode 4 im Prinzip nicht zugeordneten Bereiche 22, 24 der Schrägflächen 8" hindurchtretenden Lichtanteile sind in Fig. 3 mit C einschließlich Doppelpfeil gekennzeichnet und gelangen größtenteils zum Erfassungsbereich, so dass diese Strahlungsanteile nicht verloren gehen.

Auch die Stufenplatte 2" gemäß Fig. 3 kann rotationssymmetrisch in der Weise ausgebildet werden, wie es bereits im Zusammenhang mit Fig. 2 erläutert wurde.

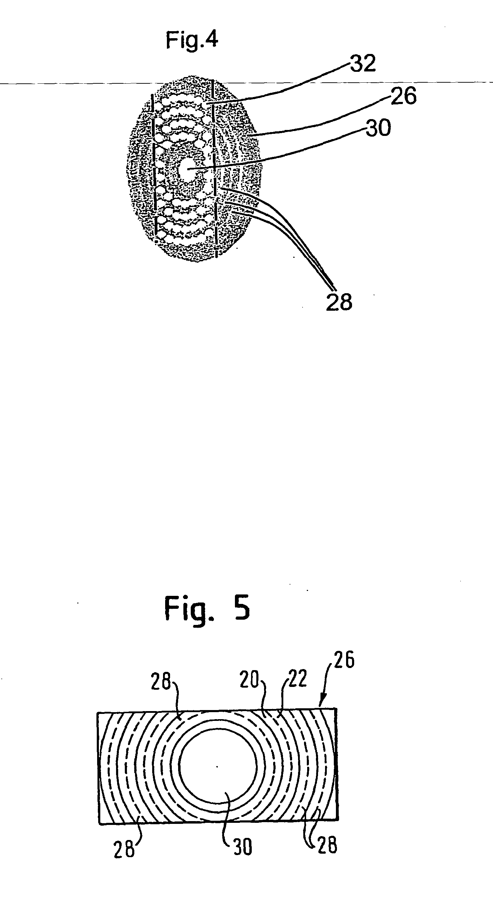

Fig. 4 zeigt eine dreidimensionale Prinzipdarstellung einer rotationssymmetrischen Stufenplatte 26 mit konzentrischen Keilringen 28, welche einen zentralen Bereich 30 der Stufenplatte 26 umgeben. Der zentrale Bereich 30 ist dabei als planparallele Platte ausgebildet, so dass er einer Empfangsoptik 14 gemäß den Fig. 2 und 3 zugeordnet werden kann, ohne die in die Empfangsoptik 14 eintretende Strahlung in relevanter Weise zu beeinflussen. Alternativ kann der zentrale Bereich 30 bei gleicher Wirkung auch als Durchgangsloch ausgebildet sein. Auch eine Ausbildung als Empfangslinse oder als Linsenbereich einer Empfangsoptik ist möglich.

Die den zentralen Bereich 30 konzentrisch umgebenden Keilringe 28 sind gegenüber Ringen von Leuchtdioden 32 vorgesehen, die ebenfalls konzentrisch um den zentralen Bereich 30 angeordnet sind, wobei sich die Leuchtdioden 32 jeweils gegenüber einer zwischen zwei Keilringen 28 ausgebildeten Stufe entsprechend Fig. 3 befinden. Die Leuchtdioden 32 liegen dabei innerhalb eines im Wesentlichen rechteckigen Feldes, so wie es der üblichen Bauart optoelektronischer Sensoren entspricht. Dies bedeutet, dass beim Einsatz der Stufenplatte 26 gemäß Fig. 4 diese entlang den in Fig. 4 gestrichelt gezeichneten Linien geschnitten wird, so dass auch die Stufenplatte 26 letztlich im Wesentlichen die Form eines Rechtecks aufweist.

Eine solche Stufenplatte ist in Fig. 5 in Draufsicht gezeigt. Gut zu erkennen ist der zentrale Bereich 30, welcher von konzentrischen Keilringen 28 umgeben wird, von denen jedoch die äußeren aufgrund der Rechteckform der Stufenplatte 26 unvollständig sind. Gestrichelt eingezeichnet sind in Fig. 5 die in den Schrägflächen 8" gemäß Fig. 3 vorhandenen Knicke, welche beispielsweise den Bereich 20 gemäß Fig. 3 vom Bereich 22 gemäß Fig. 3 trennen.

### Bezugszeichenliste

- 2: Stufenplatte
- 2': Stufenplatte
- 2": Stufenplatte
- 4: Leuchtdioden
- 6: Keilplatten
- 8: Schrägflächen
- 8': Schrägflächen
- 8": Schrägflächen
- 10: Endflächen
- 10': Endflächen
- 12: Bereich
- 14: Empfangsoptik
- 16: Stufenbereich
- 16': Stufenbereich
- 18: Stufenbereich
- 20: Bereich
- 22: Bereich
- 24: Bereich
- 26: Stufenplatte
- 28: Keilringe
- 30: zentraler Bereich
- 32: Leuchtdioden

## Patentansprüche

1. Optoelektronischer Sensor mit einer integrierten Anordnung mehrerer, im Bereich einer Empfangsoptik (14) angeordneter Leuchtdioden (4, 32) zur Ausleuchtung eines Erfassungsbereichs, wobei den Leuchtdioden (4, 32) strahlformende optische Elemente (2, 2', 2", 28) zugeordnet sind, die eine Keilform aufweisen, wobei den Leuchtdioden (4, 32) jeweils genau ein Keilelement (6) oder Bereiche (20) von bis zu vier benachbarten Keilelementen zugeordnet sind,
**dadurch gekennzeichnet,**
**dass** die strahlformenden optischen Elemente (2, 2', 2", 28) optische Eigenschaften besitzen die von einem Neigungs- winkel einer Schrägfläche (8) des Keilelements oder der Keilelemente abhängig sind, und, die sich in abhängigkeit von ihrer Relativposition zur Empfangsoptik (14) von einander unterscheiden, und
**dass** alle strahlformenden optischen Elemente (2, 2', 2", 28) miteinander fest verbunden und in einer einheitlichen, eine Mehrzahl von keilförmigen Stufen aufweisenden Stufenplatte ausgeformt sind.

2. Optoelektronischer Sensor nach Anspruch 1,
**dadurch gekennzeichnet ,**
**dass** zumindest einige der strahlformenden Elemente (2, 2', 2", 28) zu einer Umlenkung des von den jeweiligen Leuchtdioden (4, 32) abgestrahlten Lichts in Richtung der optischen Achse der Empfangsoptik (14) ausgelegt sind.

3. Optoelektronischer Sensor nach einem der vorhergehenden Ansprüche,
**dadurch gekennzeichnet ,**
**dass** das einer Leuchtdiode (4) zugeordnete Keilelement als genau eine Keilplatte (6) mit einer Schrägfläche (8) ausgebildet ist, welche auf der der Leuchtdiode (4) zugewandten Seite und/oder auf der der Leuchtdiode (4) abgewandten Seite der Keilplatte (6) vorgesehen ist, wobei insbesondere zum Erreichen des jeweils erforderlichen Beleuchtungsprofils des Erfassungsbereichs die Neigung der Schrägfläche (8) jeder Keilplatte (6) in zwei zueinander senkrechten Richtungen individuell an die Relativposition zwischen der jeweils zugeordneten Leuchtdiode (4) und der Empfangsoptik angepasst ist.

4. Optoelektronischer Sensor nach einem der Ansprüche 1 oder 2,
**dadurch gekennzeichnet ,**
**dass** das einer Leuchtdiode (4) zugeordnete Keilelement als ein Abschnitt genau eines Keilstreifens oder Keilringes (28) mit zumindest einer Schrägfläche (8') ausgebildet ist, welche auf der der Leuchtdiode (4) zugewandten Seite und/oder auf der der Leuchtdiode (4) abgewandten Seite des Keilstreifens oder Keilringes (28) vorgesehen ist.

5. Optoelektronischer Sensor nach einem der Ansprüche 3 oder 4,
**dadurch gekennzeichnet ,**
**dass** Keilplatte, Keilstreifen oder Keilring (28) mit der jeweils zugeordneten Leuchtdiode (4, 32) derart ausgerichtet ist, dass das von dieser Leuchtdiode (4, 32) ausgesandte Licht möglichst vollständig durch die Schrägfläche (8, 8', 8") der jeweiligen Keilplatte oder des jeweiligen Keilstreifens oder Keilringes (28) tritt.

6. Optoelektronischer Sensor nach einem der Ansprüche 1, 2 oder 5,
**dadurch gekennzeichnet ,**
**dass** das einer Leuchtdiode (4, 32) zugeordnete Keilelement als Abschnitte (20) von bis zu vier, bevorzugt von genau zwei aneinander angrenzenden Keilstreifen oder Keilringen (28) ausgebildet ist, wobei insbesondere die Keilstreifen oder Keilringe (28) mit der jeweils zugeordneten Leuchtdiode (4, 32) derart ausgerichtet sind, dass das von dieser Leuchtdiode (4, 32) ausgesandte Licht ungefähr zur Hälfte durch die Schrägfläche (8") eines ersten Keilstreifens oder Keilringes (28) und zur anderen Hälfte durch die Schrägfläche (8") eines angrenzenden zweiten Keilstreifens oder Keilringes (28) tritt.

7. Optoelektronischer Sensor nach Anspruch 6,
**dadurch gekennzeichnet ,**
**dass** die Schrägfläche (8") jedes Keilstreifens oder Keilringes (28) von zwei parallel zueinander verlaufenden Abschnitten (20, 22; 20, 24) mit voneinander verschiedenen Neigungen gebildet ist, wobei insbesondere jeder der beiden Abschnitte (20, 22; 20, 24) ungefähr die Hälfte der Schrägfläche (8") bildet, wobei insbesondere die beiden Abschnitte (20, 22; 20, 24) stufenlos ineinander übergehen.

8. Optoelektronischer Sensor nach einem der Ansprüche 3 bis 7,
**dadurch gekennzeichnet ,**
**dass** eine keine Schrägflächen (8, 8') aufweisende Endfläche (10, 10') der Keilplatte, des Keilstreifens oder des Keilringes (28) senkrecht zur Hauptabstrahlrichtung (A) der Leuchtdiode (4, 32) verläuft.

9. Optoelektronischer Sensor nach einem der vorhergehenden Ansprüche,
**dadurch gekennzeichnet ,**
**dass** die Stufenplatte als nachbearbeitetes Spritzgussteil ausgebildet ist.

10. Optoelektronischer Sensor nach Anspruch 9,
**dadurch gekennzeichnet ,**
**dass** in der Stufenplatte mehrere konzentrische Keilringe (28) vorgesehen sind, welche insbesondere direkt aneinander angrenzen, wobei die Stufenplatte (26) insbesondere eine rechteckige Form besitzt, so dass zumindest einige der konzentrischen Keilringe (28) nur unvollständig auf der Stufenplatte (26) vorhanden sind.

## Claims

1. An optoelectronic sensor comprising an integrated arrangement of a plurality of light emitting diodes (4, 32) arranged in the region of an optical receiving system (14) for the illumination of a detection region, with beam-shaping optical elements (2, 2', 2", 28) being associated with the light emitting diodes (4, 32) and having a wedge shape, with precisely one wedge element (6) or regions (20) of up to four adjacent wedge elements being associated with each of the light emitting diodes (4, 32)
**characterized in that**
the beam-shaping optical elements (2, 2', 2", 28) have optical properties which are dependent on an angle of inclination of a sloping surface (8) of the wedge element or wedge elements and which differ from one another in dependence on their relative position to the optical receiving system (14); and **in that** all the beam-shaping optical elements (2, 2', 2", 28) are fixedly connected to one another and are shaped in a uniform stepped plate having a plurality of wedge-shaped steps.

2. An optoelectronic sensor in accordance with claim 1, **characterized in that** at least some of the beam-shaping elements (2, 2', 2", 28) are designed for a deflection of the light radiated by the respective light emitting diodes (4, 32) in the direction of the optical axis of the optical receiving system (14).

3. An optoelectronic sensor in accordance with any one of the preceding claims, **characterized in that** the wedge element associated with a light emitting diode (4) is made as precisely one wedge plate (6) having a sloping surface (8) which is provided at the side facing the light emitting diode (4) and/or at the side of the wedge plate (6) remote from the light emitting diode (4), with in particular, in order to achieve the respectively required illumination profile of the detection region, the inclination of the sloping surface (8) of each wedge plate (6) being matched individually to the relative position between the respectively associated light emitting diode (4) and the optical receiving system in two directions perpendicular to one another.

4. An optoelectronic sensor in accordance with claim 1 or claim 2, **characterized in that** the wedge element associated with a light emitting diode (4) is made as a section of precisely one wedge strip or wedge ring (28) having at least one sloping surface (8'), which is provided at the side facing the light emitting diode (4) and/or at the side of the wedge strip or wedge ring (28) remote from the light emitting diode (4).

5. An optoelectronic sensor in accordance with any one of the claims 3 or 4, **characterized in that** the wedge plate, wedge strip or wedge ring (28) is aligned with the respectively associated light emitting diode (4, 32) such that the light transmitted by this light emitting diode (4, 32) passes as completely as possible through the sloping surface (8, 8', 8") of the respective wedge plate or of the respective wedge strip or wedge ring (28).

6. An optoelectronic sensor in accordance with any one of the claims 1, 2 or 5, **characterized in that** the wedge element associated with a light emitting diode (4, 32) is made as sections (20) of up to four, preferably of precisely two, mutually adjacent wedge strips or wedge rings (28), with in particular the wedge strips or wedge rings (28) being aligned with the respectively associated light emitting diode (4, 32) such that approximately half the light transmitted by this light emitting diode (4, 32) passes through the sloping surface (8") of a first wedge strip or wedge ring (28) and the other half passes through the sloping surface (8") of an adjacent second wedge strip or wedge ring (28).

7. An optoelectronic sensor in accordance with claim 6, **characterized in that** the sloping surface (8") of each wedge strip or wedge ring (28) is formed by two sections (20, 22; 20, 24) extending parallel to one another and having inclinations different from one another, with in particular each of the two sections (20, 22; 20, 24) forming approximately half of the sloping surface (8"), with in particular the two sections (20, 22; 20, 24) merging continuously into one another.

8. An optoelectronic sensor in accordance with any one of the claims 3 to 7, **characterized in that** an end face (10, 10') of the wedge plate, of the wedge strip or of the wedge ring (28) having no sloping surfaces (8, 8') extends perpendicular to the main radiation direction (A) of the light emitting diode (4, 32).

9. An optoelectronic sensor in accordance with any one of the preceding claims, **characterized in that** the stepped plate is made as a post-processed injection molded part.

10. An optoelectronic sensor in accordance with claim 9, **characterized in that** a plurality of wedge rings (28) are provided in the stepped plate which are in particular directly adjacent to one another, with the stepped plate (26) in particular having a rectangular shape such that at least some of the concentric wedge rings (28) are only present incompletely on the stepped plate (26).

## Revendications

1. Capteur optoélectronique avec un agencement intégré de plusieurs diodes électroluminescentes (4, 32), agencé dans la zone d'une optique de réception (14), pour éclairer une zone de captage, dans lequel des éléments optiques (2, 2', 2", 28) de conformation de faisceau sont associés aux diodes électroluminescentes (4, 32), ces éléments présentant une forme en coin, et aux diodes électroluminescentes (4, 32) sont associés respectivement exactement un élément en coin (6) ou des zones (20) constituées de jusqu'à quatre éléments en coin voisins,
**caractérisé en ce que**
les éléments optiques (2, 2', 2", 28) de conformation de faisceau possèdent des propriétés optiques qui dépendent d'un angle d'inclinaison d'une surface oblique (8) de l'élément en coin ou des éléments en coin, et qui diffèrent les unes des autres en fonction de leur position relative par rapport à l'optique de réception (14), et
**en ce que** tous les éléments optiques (2, 2', 2", 28) de conformation de faisceau sont reliés fermement les uns aux autres et intégrés dans une plaque à gradins unitaire, présentant une pluralité de gradins en forme de coin.

2. Capteur optoélectronique selon la revendication 1,
**caractérisé en ce que** certains au moins des éléments (2, 2', 2", 28) de conformation de faisceau sont conçus pour dévier la lumière émise par les diodes électroluminescentes respectives (4, 32) en direction de l'axe optique de l'optique de réception (14).

3. Capteur optoélectronique selon l'une des revendications précédentes,
**caractérisé en ce qu'**un élément en coin associé à une diode électroluminescente (4) est réalisé sous forme de exactement une plaque en coin (6) avec une surface oblique (8), qui est prévue sur le côté tourné vers la diode électroluminescente (4) ou sur le côté détourné de la diode électroluminescente (4) de la plaque en coin (6), et en particulier pour atteindre le profil d'éclairement respectivement requis de la zone de captage, l'inclinaison de la surface oblique (8) de chaque plaque en coin (6) dans deux directions mutuellement perpendiculaires est adaptée individuellement à la position relative entre la diode électroluminescente (4) respectivement associée et l'optique de réception.

4. Capteur optoélectronique selon l'une des revendications 1 ou 2,
**caractérisé en ce que** l'élément en coin associé à une diode électroluminescente (4) est réalisé comme un tronçon de exactement un ruban ou une bague en coin (28) avec au moins une surface oblique (8'), laquelle est prévue sur le côté tourné vers la diode électroluminescente (4) et/ou sur le côté détourné de la diode électroluminescente (4), du ruban ou de la bague en coin (28).

5. Capteur optoélectronique selon l'une des revendications 3 ou 4,
**caractérisé en ce que** la plaque en coin, le ruban en coin ou la bague en coin (28) est orienté(e), avec la diode électroluminescente (4, 32) respectivement associée, de telle façon que la lumière émise par cette diode électroluminescente (4, 32) passe le plus totalement possible à travers la surface oblique (8, 8', 8") de la plaque en coin respective ou du ruban respectif ou de la bague en coin respective (28).

6. Capteur optoélectronique selon l'une des revendications 1, 2 ou 5,
**caractérisé en ce que** l'élément en coin associé à une diode électroluminescente (4, 32) est réalisé sous forme de tronçon (20) de jusqu'à quatre, et de préférence d'exactement deux, rubans ou bagues en coin (28) mutuellement adjacent(e)s, et le ruban ou la bague en coin (28) sont en particulier orientés avec la diode électroluminescente (4, 32) respectivement associée de telle façon que la lumière émise par cette diode électroluminescente (4, 32) passe approximativement pour moitié à travers la surface oblique (8") d'un premier ruban en coin ou d'une première bague en coin (28), et pour l'autre moitié à travers la surface oblique (8") d'un second ruban en coin ou d'une seconde bague en coin (28) adjacent(e).

7. Capteur optoélectronique selon la revendication 6,
**caractérisé en ce que** la surface oblique (8") de chaque ruban ou bague en coin (28) est formée par deux tronçons (20, 22 ; 20, 24) s'étendant parallèlement l'un à l'autre et présentant des inclinaisons différentes l'une de l'autre, et en particulier chacun des deux tronçons (20, 22 ; 20, 24) forme approximativement la moitié de la surface oblique (8"), et les deux tronçons (20, 22 ; 20, 24) se transforment en particulier l'un dans l'autre sans gradins.

8. Capteur optoélectronique selon l'une des revendications 3 à 7,
**caractérisé en ce qu'**une surface terminale (10, 10') de la plaque en coin, du ruban en coin ou de la bague en coin (28), qui ne présente aucune surface oblique (8, 8'), s'étend perpendiculairement à la direction de rayonnement principale (A) de la diode électroluminescente (4, 32).

9. Capteur optoélectronique selon l'une des revendications précédentes,
**caractérisé en ce que** la plaque à gradins est réalisée sous forme d'une pièce moulée par injection ultérieurement usinée.

10. Capteur optoélectronique selon la revendication 9,
**caractérisé en ce que** plusieurs bagues en coin (28) concentriques sont prévues dans la plaque à gradins, lesquelles sont en particulier directement mutuellement adjacentes, et la plaque à gradins (26) possède en particulier une forme rectangulaire, de sorte que quelques-unes au moins des bagues en coin concentriques (28) ne sont présentes que de façon incomplète sur la plaque à gradins (26).
